# EUROPEAN PATENT APPLICATION

(11) **EP 4 648 555 A1**
(43) Date of publication of application: **12.11.2025**
(21) Application number: 25171527.2
(22) Date of filing: 21.04.2025
(51) Int. Cl.: H05B 45/10, G03B 15/03, H05B 45/325

(54) **HIGH-POWER LED CIRCUIT WITH PULSED OPERATION FOR FLASHLIGHTS**

(30) Priority: 08.05.2024 CN 202410563558
(71) Applicant: Shanghai Caler Electrics Co., Ltd, Shanghai (CN); Shanghai Jinbei Photographic Equipments Co., Ltd, Shanghai (CN)
(72) Inventor: Ye, Xiaochun, Shanghai (CN); Li, Mingyong, Shanghai (CN); Guo, Yuanzhang, Shanghai (CN)
(74) Representative: Plavsa, Olga

(57) **Abstract**

The invention discloses high-power LED circuit with pulsed operation for flashlights, comprising: LED group; energy storage capacitor, with one terminal electrically connected to the LED group, and the other grounded; NMOS transistor, with gate electrically connected to PWM to control signal, and source grounded; freewheeling diode, with input electrically connected to the drain of NMOS transistor, and output electrically connected to the LED group input; common mode choke, with one terminal electrically connected to the LED group output, and the other electrically connected to freewheeling diode input and the drain of NMOS transistor; mainly achieves the replacement of traditional HID (High Intensity Discharge Lamp) with pulse-resistant large-current LED in flashlight, significantly improve flashlight life; and compared to conventional LED flash, achieves ultra-compact LED flash with 50-100 times the power of larger LED flash photographic effect, with high portability significantly reducing photography equipment cost.

## Description

### TECHNICAL FIELD

The invention relates to power electronics technology, and particularly relates to high-power LED circuit with pulsed operation for flashlights.

### BACKGROUND

In the contemporary realm of photography, the necessity of equipment for the purpose of patching light persists as a popular demand within the market; commonly flashes are now predominantly HID (High Intensity Discharge Lamp).

The inventor, while experimenting with LED circuit, found at least the following technical problems in the prior tech:
HID as flashes, with short lifespan, low light efficacy and the need to trigger high voltage which leads to complex circuitry;
With the advantages of long lifespan, high light efficiency, etc., the invention considers utilizing LED light source as a flash for patching light; however, in the use of ordinary LED light source as patch light in photography, with higher camera shutter speed, the photos will become darker, until all black, which cannot achieve the effect of patching light; choosing higher power LED can improve the brightness lightly, but the size and cost of light equipment also doubled, and cannot be an ideal choice.

In summary, the existing flashes cannot meet practical usage requirements.

### SUMMARY

The invention presents high-power LED circuit with pulsed operation, cameras and camcorders, based on LED light source applied in flashes, and solves the problem of the existing flashes cannot meet practical usage requirements.

On the one hand, the invention provides a high-power LED circuit with pulsed operation for flashlights, comprising: an LED light source group; an energy storage capacitor (EC1), with one terminal electrically connected to the LED light source group, and the other grounded; an NMOS transistor, with a gate electrically connected to a PWM control signal, and a source grounded; a freewheeling diode, with an input electrically connected to a drain of the NMOS transistor, and an output electrically connected to the LED group input; a common mode choke, with one terminal electrically connected to an output of the LED light source group, and the other terminal electrically connected to the input of the freewheeling diode and a drain of the NMOS transistor.

Optionally, the number of LED light sources of the above-mentioned LED light source group can be 2 or more.

Optionally, the 2 adjacent LED light sources have a same current amplitude.

Optionally, the 2 adjacent LED light sources have different current amplitudes.

Optionally, mentioned energy storage capacitor is specifically an energy storage capacitor with adjustable energy storage capacity.

Optionally, the mentioned energy storage capacitor is specifically energy storage capacitor with adjustable operating voltage.

Optionally, mentioned LED circuit further comprises: an MCU, electrically connected to the gate of the NMOS transistor.

Optionally, the MCU is specifically an MCU with adjustable pulse wave duty cycle.

Optionally, the high-power LED circuit comprises:
a high-level turn-on branch, which is an electric circuit through which current flows when the PWM control signal is in high level and the NMOS transistor (Q1) is ON, and
a low-level turn-off branch, which is a discharge circuit through which current flows when the PWM control signal is in low level and the NMOS transistor (Q1) is OFF.

Optionally, in the high-level turn-on branch, the current passes through the energy storage capacitor (EC1), the LED light source group (LED1), the common mode choke (L1), and the NMOS transistor (Q1) in turn;
in the low-level turn-off branch, the current passes through the LED light source group (LED1), the common mode choke (L1), and the FWD (D1) in turn.

On the other hand, the invention also provides a camera, comprising mentioned LED circuit; subject of the camera electrically connected to LED circuit.

Thirdly, the invention also provides a camcorder, comprising mentioned LED circuit; subject of the camcorder electrically connected to LED circuit.

The invention provides 1 or more technical programmes, with at least the following technical effects or advantages:

The primary function of the invention is to substitute HID light sources with LED light sources, thereby enhancing the longevity of flashes; due to the higher light efficiency of the LED light source, less energy is needed under the same guide number; thus under the power supply conditions of using battery with same capacity, obviously increase the flash frequency, for mobile flash or compact dome flash to ensure a more durable use, and enhance the product competitiveness; compared with the traditional LED light, the invention achieves the ultra-small volume of LED flash with the same photographic effects as LED light with larger volume and 50-100 times power, offering high degree of portability, while significantly reducing the cost of photographic equipment.

### BRIEF DESCRIPTION OF THE DRAWINGS

FIG. 1 circuit diagram of high-power LED circuit with pulsed operation for flashlights in the implementation example of the invention;
FIG. 2 shows a schematic diagram of the direction of current flow in LED circuit described in FIG. 1, when PWM-H is in high level and the NMOS transistor is on;
FIG. 3 shows a schematic diagram of the direction of current flow in LED circuit described in FIG. 1 when PWM-L is in low level and the NMOS transistor is off;
FIG. 4 shows the PWM control signal waveform in LED circuit described in FIG. 1;

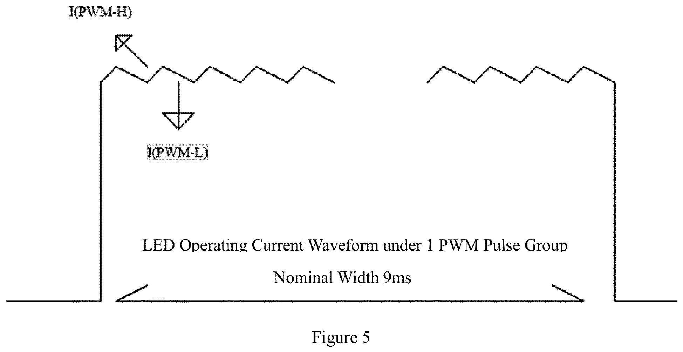

FIG. 5 shows a waveform of the operating current of LED light source group in LED circuit described in FIG. 1;
In the FIG.: LED1, LED light source group; EC1, energy storage capacitor; D1, freewheeling diode; Q1, NMOS transistor.

### DETAILED DESCRIPTION

The invention offers high-power LED circuit with pulsed operation for flashlights, solving the problem that the existing flashes cannot meet practical usage requirements.

Firstly, the terms appearing in the specification will be explained separately.

### 1. PWN

PWM (Pulse Width Modulation) is method of digital coding of analogue level signal. Using highspeed counter, the duty cycle of square wave is modulated to encode the electrical level of a specific analogue signal. The PWM signal is still digital, since the full amplitude DC supply is either completely ON or completely OFF at any given moment. The voltage or current source is applied to the analog load in a repetitive pulse train of ON or OFF. When it is ON, the DC power supply is added to the load, and when it is OFF, the power supply is disconnected.

The main features of the PWM pulse comprises:
Duty cycle: in a PWM period, the proportion of time a pulse spends in high level state compared to its total period; the magnitude of the duty cycle determines the average voltage or current level of the PWM signal.
Frequency: the frequency of PWM signal is the reciprocal of its period, which determines the changing pace of the PWM signal changes.
Resolution: the resolution of a PWM depends on the bits in the counter or register applied in controlling the pulse width; more bits, higher resolution and thus achieve higher the analogue accuracy.

### 2. LED

LED (Light Emitting Diode) is a semiconductor device that facilitates the conversion of electricity into visible light. directly transfer electricity to light.

### 3. MCU

MCU (Microcontroller Unit) also known as single chip microcomputer or microcontroller, is a kind of integrated circuit chip, comprising peripherals such as processing units, memories, timers and input/output ports.

To better understand above LED circuit, the above-described LED circuit will be described in detail in following with the accompanying drawings of the specification and specific embodiments. Obviously, the embodiment described in the invention is a part of the embodiments, and not all the embodiments. Based on the embodiments of the invention, all other embodiments obtained by the technical persons who haven't offer creative labor, fall within the scope of protection of the invention.

### (1) Circuit Layout

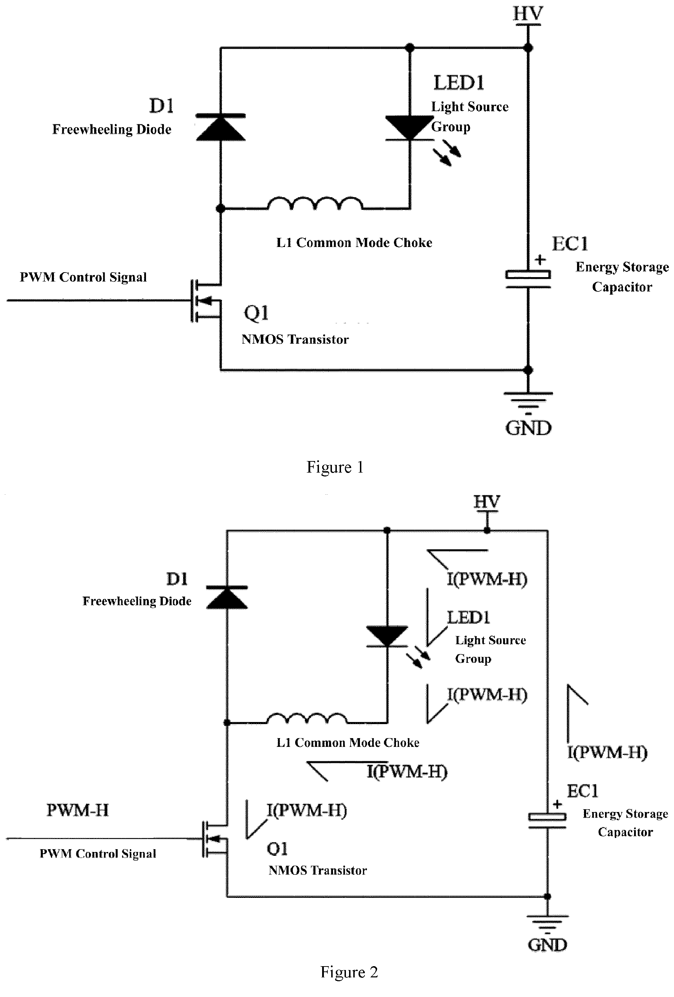

Please refer to FIG. 1, a high-power LED circuit with pulsed operation for flashlights comprising:
an LED light source group LED1;
an Energy storage capacitor EC1, with one terminal electrically connected to an input of the LED light source group LED1, and the other terminal grounded;
an NMOS transistor Q1, with a gate electrically connected to a PWM control signal, and a source grounded;
a freewheeling diode (FWD) D1, with an input electrically connected to a drain of the NMOS transistor Q1, and an output electrically connected to an input of LED light source group LED1;
a common mode choke L1, with one terminal electrically connected to an output of LED light source group LED1, and the other terminal electrically connected to the input of the Freewheeling diode (FWD) D1 and a drain of the NMOS transistor Q1.

Therein, there is no limitation in the number of LED light sources in the LED light source group, and the number of LED light sources can be 2 or more, including 2, 5, 10, etc. In specific applications, the specific number of LED light sources can be selected according to actual needs, and is not limited in the invention.

Among a plurality of LED light sources, whether the 2 adjacent LED light sources have same or different current amplitudes is not limited in the invention. In specific application, to meet actual needs, the current amplitudes of all the LED light sources can be set to be the same, or the current amplitudes of all the LED light sources can be set to be different; also, the current amplitude of some of the LED light sources can be set to be the same and the current amplitude of the other part of the LED light sources can be set to be different. By controlling the current amplitude of LED light sources, the flash energy of LED circuit can be adjusted.

Optimally, the energy storage capacitor EC1 is specifically an energy storage capacitor with adjustable energy storage capacity; by adjusting the energy storage capacity of the energy storage capacitor EC1, the flash energy of LED circuit can be adjusted.

Optimally, the mentioned energy storage capacitor EC1 is specifically an energy storage capacitor with adjustable operating voltage; by adjusting the operating voltage on the energy storage capacitor EC1, the flash energy of LED circuit can be adjusted.

Optimally, LED circuit of the invention also comprises an MCU, which is electrically connected to the gate of the NMOS transistor; combine the MCU with LED circuit can meet the various needs for photo-taking and photography scenarios; for example, seamlessly electrically connecting LED circuit with the MCU to the ordinary camera and the camcorder.

Optimally, the MCU is specifically an MCU with adjustable duty cycle of pulse wave, and by adjusting the duty cycle of pulse wave of the MCU to adjust the overall current of LED circuit and thus adjust the magnitude of flash energy, to satisfy the actual use of different photo-taking and photography requirements. For example, when adjust duty cycle of pulse wave larger, the increasing percentage of the current of common mode choke L1 increases, and the overall current will be on the high side, thus achieve the effect of increasing the current, which shows an increase in flash energy; while turn duty cycle of pulse wave down, the decreasing percentage of the current of common mode choke L1 increases, and the overall current will be on the low side, thus achieve the effect of decreasing the current, which shows a decrease in flash energy.

### (2) The role of electronic units in LED circuit

Also refer to FIG. 1, the roles of each electronic unit of the high-power LED circuit with pulsed operation for flashlights, are as follows:
The Energy storage capacitor EC1 provides light emitting energy to the LED light source group LED1;
The LED light source group LED1, as a light-emitting unit, with large pulse current resistance ability of the light source;
The Common mode choke L1, with role one to limit LED light source group LED1 through the current, to prevent LED light source group LED1 from being overcurrent burned; and role two, in a single working PWM pulse group, to stabilize the current in LED light source group LED1 to emit stable light;
The NMOS transistor Q1, as switch unit, is applied to control the on-time and off-time of the LED light source group LED1 and the high-level turn-on branch to GND (i.e., ground), so as to reach the current of regulating the LED light source group LED1 and the high-level turn-on branch;
The Freewheeling diode (FWD) D1, when the NMOS transistor Q1 is off, the current of common mode choke L1 cannot be abruptly changed, through FWD D1 to achieve freewheeling to the LED light source group LED1 to form a discharging circuit.

To be noted, high-power LED circuit with pulsed operation for flashlights has a high-level turn-on branch and a low-level turn-off branch.

The high-level turn-on branch refers to the electric circuit through which the current flows when the PWM control signal is in high level and the NMOS transistor Q1 is ON.

The low-level turn-off branch refers to the discharge circuit through which the current flows when the PWM control signal is in low level and the NMOS transistor Q1 is OFF.

As shown in FIG.2, in high-level turn-on branch, the current passes through the energy storage capacitor EC1, the LED light source group LED1, the common mode choke L1, and the NMOS transistor Q1 in turn.

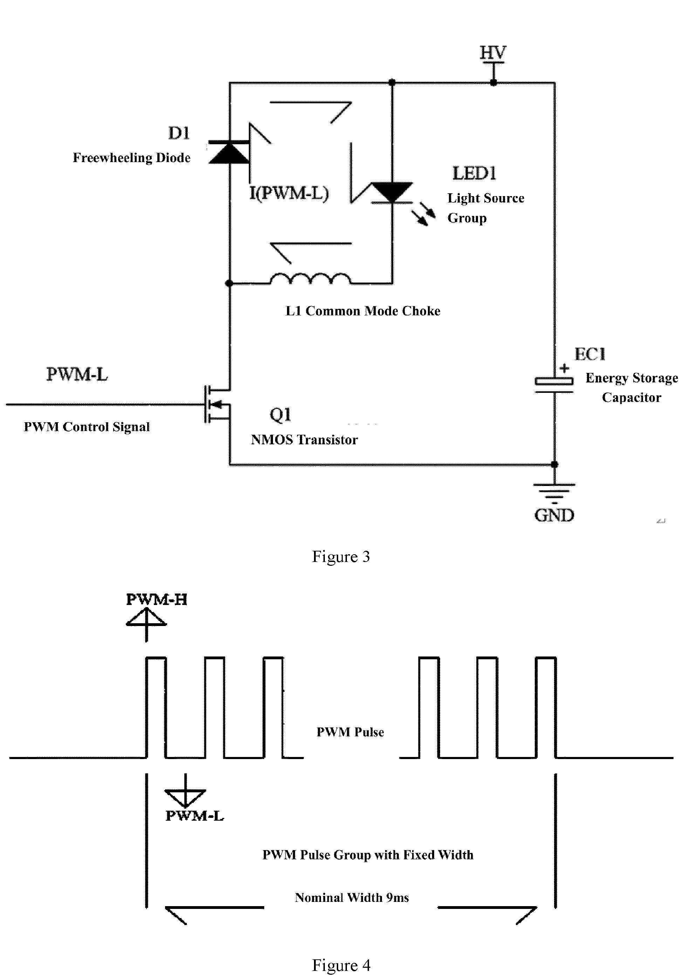

As shown in FIG. 3, in the low-level turn-off branch, the current passes through the LED light source group LED1, the common mode choke L1, and the FWD D1 in turn.

### (3) Circuit operating state

As shown in FIG.4, in the waveform of PWM control signal, PWM-H stands for high-level, and PWM-L stands for low-level; The PWM pulse group has a constant width with a nominal width of 9ms.

Please refer to both FIG. 1 and FIG. 4, the operation of the high-power LED circuit with pulsed operation for flashlights is as follows:
1) When the PWM control signal is not given before:
   The energy storage capacitor EC1 is charged by the charging source to remain at the set voltage value.
2) When the PWM pulse group control signal is given through the MCU control circuit:
   A) PWM high-level (i.e., PWM-H):
      When the NMOS transistor Q1 of the circuit turns on, the energy storage capacitor EC1 is discharged through LED light source group LED1, the common mode choke L1, and the NMOS transistor Q1, and the current of LED light source group LED1 rises linearly; wherein, the common mode choke L1 determines the rise slope
   B) PWM low-level (i.e., PWM-L):
      When the NMOS transistor Q1 of the circuit turns off, the current of common mode choke L1 cannot be mutated to zero, turn to pass through FWD D1 to LED light source group LED 1 to form a discharge circuit, the current of LED light source group LED 1 goes linearly down.
   C) Through adjusting the current amplitude of the LED light source group LED1, regulation of the flash energy of the flash can be achieved; Specific flash energy amplitude is determined by the current of the selected pulse-resistant high-current LED light source group LED1 and the capacity of the energy storage capacitor EC1 and the operating voltage; the control principle of how circuit control the LED light source group LED1 current is as follows:
      The PWM-H and PWM-L of the PWM pulse wave are output at a specific period and limit the length of the pulse wave, and adjust the ratio of the time of the PWM-H and PWM-L in the period to adjust the entire average current of LED light source group LED1, specifically:
      When the duty cycle turns up, the time ratio of PWM-H relative to PWM-L increases, the increase proportion of common mode choke L1 current rises, and the overall current is on the large side, which achieves the effect of increasing the current, shows an increase in flash energy.

When the duty cycle turns down, the time ratio of PWM-H time relative to PWM-L decreases, the decrease proportion of common mode choke L1 current decreases, and the overall current is on the small side, to achieve the effect of reducing the current, which shows a decrease in flash energy.

The invention also presents a camera that includes the mentioned LED circuit; and the camera body is electrically connected to the mentioned LED circuit.

The invention also presents a camcorder that includes the mentioned LED circuit; and the camcorder body is electrically connected to the mentioned LED circuit.

Obviously, the technicians of the field can make various changes and variations to the invention without departing from the spirit and scope of the invention; thus, if these changes and variations of the invention fall within the scope of the claims of the invention and the scope of its equivalent technics, the invention also tends to encompass these changes and variations.

## Claims

1. A high-power LED circuit with pulsed operation for flashlights, comprising:
an LED light source group (LED1);
an energy storage capacitor (EC1), with one terminal electrically connected to the LED light source group (LED1), and the other grounded;
an NMOS transistor (Q1), with a gate electrically connected to a PWM control signal, and a source grounded;
a freewheeling diode (D1), with an input electrically connected to a drain of the NMOS transistor (Q1), and an output electrically connected to the LED group input (LED1);
a common mode choke (L1), with one terminal electrically connected to an output of the LED light source group (LED1), and the other terminal electrically connected to the input of the freewheeling diode (D1) and a drain of the NMOS transistor (Q1).

2. The high-power LED circuit according to claim 1, wherein the number of LED light sources in said LED light source group (LED1) is 2 or more.

3. The high-power LED circuit according to claim 2, wherein 2 adjacent LED light sources have a same current amplitude.

4. The high-power LED circuit according to claim 3, wherein 2 adjacent LED light sources have different current amplitudes.

5. The high-power LED circuit according to claim 1, **characterized in that** said energy storage capacitor is specifically an energy storage capacitor with adjustable energy storage capacity.

6. The high-power LED circuit according to claim 1, wherein the energy storage capacitor is specifically an energy storage capacitor with adjustable operating voltage.

7. The high-power LED circuit according to claim 1, the LED circuit also comprising:
an MCU, electrically connected to the gate of the NMOS transistor.

8. The high-power LED circuit according to claim 7, wherein the MCU is specifically an MCU that capable of adjusting a duty cycle of a pulse wave.

9. The high-power LED circuit according to any one of claims 1-7, comprising:
a high-level turn-on branch, which is an electric circuit through which current flows when the PWM control signal is in high level and the NMOS transistor (Q1) is ON, and
a low-level turn-off branch, which is a discharge circuit through which current flows when the PWM control signal is in low level and the NMOS transistor (Q1) is OFF.

10. The high-power LED circuit according to claims 9, wherein in the high-level turn-on branch, the current passes through the energy storage capacitor (EC1), the LED light source group (LED1), the common mode choke (L1), and the NMOS transistor (Q1) in turn;
in the low-level turn-off branch, the current passes through the LED light source group (LED1), the common mode choke (L1), and the FWD (D1) in turn.

11. A camera consisting of:
the LED circuit of any one of claims 1-10;
a camera body, electrically connected to the LED circuit.

12. A camcorder consisting of:
the LED circuit of any one of claims 1-10;
a camcorder body, electrically connected to the LED circuit.
